# EUROPÄISCHE PATENTANMELDUNG

(11) **EP 2 372 192 A1**
(43) Veröffentlichungstag der Anmeldung: **05.10.2011**
(21) Anmeldenummer: 10003576.5
(22) Anmeldetag: 31.03.2010
(51) Int. Cl.: F16H 57/04, F16H 1/22, F03D 11/00

(54) **Leistungsverzweigtes Getriebe für eine Windkraftanlage**

(71) Anmelder: Winergy AG, 46562 Voerde (DE)
(72) Erfinder: Hulshof, Frans, 7102 KD Winterswijk (NL)
(74) Vertreter: Michau, Sascha

(57) **Zusammenfassung**

Ein leistungsverzweigtes Getriebe umfaßt ein mit einer Rotornabe über eine Antriebswelle verbindbares außenverzahntes Zentralrad. Um das Zentralrad herum sind paarweise mehrere Ritzelwellen angeordnet. Die Ritzelwellen weisen an einem ersten Ende jeweils ein mit dem Zentralrad kämmendes Ritzel und an einem zweiten Ende jeweils ein Zahnrad mit gegenüber dem Ritzel vergrößerten Durchmesser auf. Jeweils zwei Ritzelwellen bilden ein Ritzelwellenpaar. Das Zahnrad einer ersten Ritzelwelle eines Ritzelwellenpaars ist an einer ersten Seite des Zentralrads angeordnet. Das Zahnrad der zweiten Ritzelwelle des Ritzelwellenpaars ist an der zweiten Seite des Zentralrads angeordnet. Mehrere Summierwellen sind jeweils einem Ritzelwellenpaar zugeordnet, wobei deren Ritzel mit beiden Zahnrädern eines zugeordneten Ritzelwellenpaars in Eingriff stehen. In ein Getriebegehäuse ist ein im wesentlichen radial umlaufender Schmierstoffversorgungskanal integriert, der in einem Bereich zwischen den Zahnrädern der ersten Ritzelwellen und den Zahnrädern der zweiten Ritzelwellen um das Zentralrad angeordnet ist.

## Beschreibung

Aus US 6,731,017 ist eine Antriebsvorrichtung für eine Windkraftanlage bekannt, bei dem ein Rotor über eine Rotorwelle mit einem außenverzahnten Zentralrad verbunden ist, um dessen Umfang eine Vielzahl Ritzelwellen angeordnet sind. Jede dieser Ritzelwellen umfaßt an einem ersten Ende ein mit dem Zentralrad kämmendes Ritzel, während an einem zweiten Ende ein Zahnrad angeordnet ist. Jeweils zwei Ritzelwellen bilden ein Ritzelwellenpaar. Das Zahnrad einer ersten Ritzelwelle eines Ritzelwellenpaars ist an einer dem Rotor zugewandten Seite des Zentralrads angeordnet. Dagegen ist das Zahnrad der zweiten Ritzelwelle eines Ritzelwellenpaars an einer dem Rotor abgewandten Seite des Zentralrads angeordnet. Beide Zahnräder eines Ritzelwellenpaar stehen in Eingriff mit Ritzeln an einer dem Ritzelwellenpaar zugeordneten Summierwelle. Jede Summierwelle ist wiederum mit jeweils einem von mehreren Generatoren der Windkraftanlage verbunden.

In EP 1 279 867 B1 ist ein mehrstufiges Getriebe mit einer inneren Leistungsaufteilung beschrieben, das ein mit einer Eingangswelle bzw. Ausgangswelle verbundenes außenverzahntes Großzahnrad umfaßt. Das Großzahnrad ist von mehreren Ritzelwellen umgeben, deren Zahnritzel mit dem Großzahnrad kämmen. Die Ritzelwellen tragen je ein Zahnrad. Zwei Zahnräder bilden jeweils ein Zahnradpaar und sind wechselweise vor und hinter dem Großzahnrad angeordnet. Die Zahnräder sind mit einer Schrägverzahnung von unterschiedlicher Steigungsrichtung versehen und stehen mit einer gemeinsamen, doppelschrägverzahnten, axial frei gelagerten Ritzelwelle in Eingriff. Das Großzahnrad ist von insgesamt acht Ritzelwellen umgeben, deren Zahnräder mit vier jeweils einem Zahnradpaar gemeinsamen, doppelschrägverzahnten, axial frei gelagerten Ritzelwellen in Eingriff stehen und mit diesen eine erste Stufe der Leistungsaufteilung bilden. Die vier Ritzelwellen der ersten Stufe der Leistungsaufteilung stehen mit vier Ritzelwellen einer zweiten Stufe der Leistungsaufteilung in Verbindung. Die vier Ritzelwellen der zweiten Stufe der Leistungsaufteilung tragen wiederum je ein Zahnrad, wobei zwei Zahnräder ein Zahnradpaar bilden. Die Zahnräder eines Zahnradpaares stehen mit zwei jeweils einem Zahnradpaar gemeinsamen, frei gelagerten Ritzelwellen in Eingriff.

Aus EP 1 619 386 B1 ist ein mehrstufiges leistungsverzweigtes Windkraftgetriebe für eine Windkraftanlage höherer Leistung bekannt, das sich gegenüber dem in EP 1 279 867 B1 beschriebenen Getriebe insbesondere dadurch unterscheidet, daß anstelle einer Leistungsverzweigung auf zwei oder mehr parallele Abtriebswellen eine Leistungsverzweigung auf nur eine generatorseitige Welle erfolgt. Sämtliche Ritzelwellen sind einfach schrägverzahnt und über mindestens zwei beabstandete reine Radiallager und mindestens ein reines Axiallager gelagert. Damit ist bereits für die Lagerung der Ritzelwellen eine hohe Teilevielzahl erforderlich. Dementsprechend aufwendig gestaltet sich insbesondere bei Verwendung von Gleitlagern eine Schmierstoffversorgung für Lagerelemente und Verzahnungsteile.

Der vorliegenden Erfindung liegt die Aufgabe zugrunde, ein leistungsverzweigtes Getriebe für eine Windkraftanlage zu schaffen, das eine wirksame, einfach zu realisierende Schmierstoffversorgung aufweist.

Diese Aufgabe wird erfindungsgemäß durch ein Getriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße leistungsverzweigte Getriebe für eine Windkraftanlage umfaßt ein mit einer Rotornabe über eine Antriebswelle verbindbares außenverzahntes Zentralrad. Um das Zentralrad herum sind paarweise mehrere Ritzelwellen angeordnet. Die Ritzelwellen weisen an einem ersten Ende jeweils ein mit dem Zentralrad kämmendes Ritzel und an einem zweiten Ende jeweils ein Zahnrad mit gegenüber dem Ritzel vergrößerten Durchmesser auf. Dabei bilden jeweils zwei Ritzelwellen ein Ritzelwellenpaar. Das Zahnrad einer ersten Ritzelwelle eines Ritzelwellenpaars ist an einer ersten Seite des Zentralrads angeordnet, während das Zahnrad der zweiten Ritzelwelle des Ritzelwellenpaars an der zweiten Seite des Zentralrads angeordnet ist. Darüber hinaus sind mehrere jeweils einem Ritzelwellenpaar zugeordnete Summierwellen vorgesehen, deren Ritzel mit beiden Zahnrädern eines zugeordneten Ritzelwellenpaars in Eingriff stehen. In ein Getriebegehäuse ist ein im wesentlichen tangential um das Zentralrad bzw. radial umlaufender Schmierstoffversorgungskanal integriert, der in einem Bereich zwischen den Zahnrädern der ersten Ritzelwellen und den Zahnrädern der zweiten Ritzelwellen um das Zentralrad angeordnet ist. Hierdurch wird zwischen den wechselseitig vor bzw. hinter dem Zentralrad angeordneten Zahnrädern der Ritzelwellen um das Zentralrad vorhandener Raum effizient ausgenutzt.

Der Schmierstoffversorgungskanal weist vorzugsweise Bohrungen für Spritzdüsen auf, die ggf. über kurze Leitungsstümpfe in die Bohrungen eingesetzt oder eingeschraubt sind und mittels derer Verzahnungen von Zentralrad, Ritzelwellen und Summierwellen über relativ kurze Zuführungswege mit Schmierstoff versorgt werden können. Der in das Getriebegehäuse integrierte Schmierstoffversorgungskanal trägt außerdem zu einer erhöhten Gehäusesteifigkeit bei.

Der Schmierstoffversorgungskanal ist vorzugsweise in ein zumindest zweiteiliges Getriebegehäuse eingebettet, das im Bereich des Schmierstoffversorgungskanals eine radial umlaufende Trennfuge aufweist. An der Trennfuge können außerdem integrierte Dichtflächen gebildet sein, die mittels von außerhalb des Getriebegehäuses zugänglicher Schrauben hinsichtlich eines Betriebsschmierstoffdrucks vorgespannt sind.

Entsprechend einer vorteilhaften Weiterbildung der vorliegenden Erfindung ist an den Summierwellen jeweils an der zweiten Seite des Zentralrads ein Zahnrad angeordnet, das einer zweiten Getriebestufe zugeordnet ist. Des weiteren ist ein weiterer in das Getriebegehäuse integrierter im wesentlichen radial umlaufender Schmierstoffversorgungskanal vorgesehen, der in einem Bereich zwischen den Zahnrädern der zweiten Ritzelwellen und den Zahnrädern der Summierwellen um das Zentralrad angeordnet ist. Entsprechendes gilt für Getriebe, die mehr als zwei Getriebestufen umfassen. Der weitere Schmierstoffversorgungskanal ist vorzugsweise in ein zumindest dreiteiliges Getriebegehäuse eingebettet, das im Bereich des weiteren Schmierstoffversorgungskanals eine weitere radial umlaufende Trennfuge aufweist. In entsprechender Weise können an der weiteren Trennfuge integrierte Dichtflächen gebildet sein, die mittels von außerhalb des Getriebegehäuses zugänglicher Schrauben hinsichtlich eines Betriebsschmierstoffdrucks vorgespannt sind.

Die vorliegende Erfindung wird nachfolgend an einem Ausführungsbeispiel anhand der Zeichnung näher erläutert. Es zeigt
- Figur 1: innerhalb eines Gehäuses eines leistungsverzweigten Getriebes für eine Windkraftanlage angeordnete verzahnte Bauelemente und Wellen in einer rotorseitigen perspektivischen Darstellung,
- Figur 2: die verzahnten Bauelemente und Wellen gemäß Figur 1 in einer generatorseitigen perspektivischen Darstellung,
- Figur 3: ein die verzahnten Bauelemente und Wellen gemäß Figur 1 umfassendes Gehäuse in einer generatorseitigen Ansicht,
- Figur 4: einen Querschnitt durch das in Figur 3 dargestellte Gehäuse im Bereich einer Trennfuge um ein Zentralrad des Getriebes
- Figur 5: einen weiteren Querschnitt durch das in Figur 3 dargestellte Gehäuse in einem generatorseitig an die Trennfuge angrenzenden Bereich,
- Figur 6: einen Längsschnitt durch das in Figur 3 dargestellte Gehäuse im Bereich der Trennfuge.

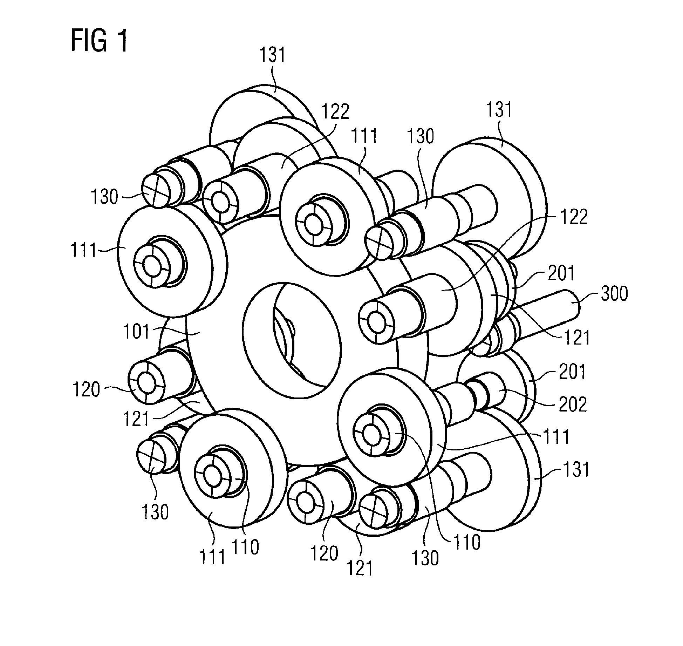

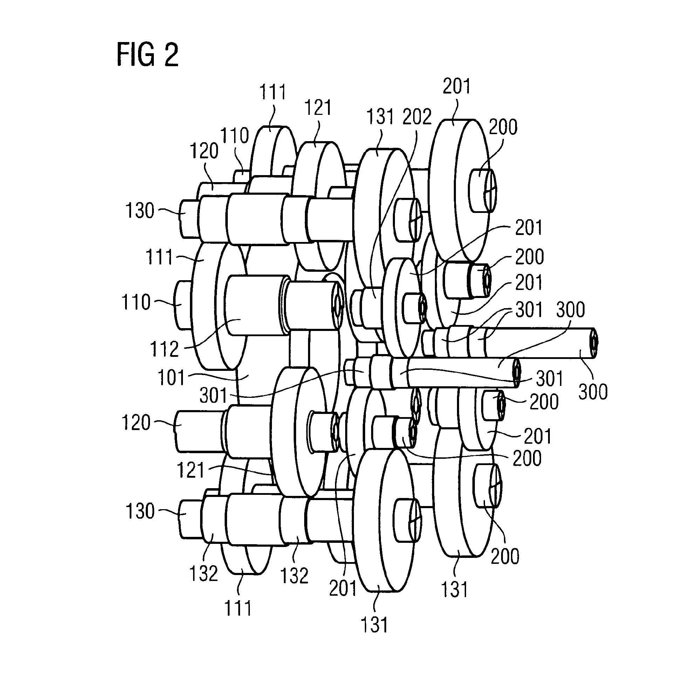

Entsprechend Figur 1 und 2 ist innerhalb eines Gehäuses eines leistungsverzweigten Getriebes für eine Windkraftanlage ein mit einer Rotornabe über eine Rotorwelle verbindbares außenverzahntes Zentralrad 101 angeordnet. Das Zentralrad 101 ist vorzugsweise drehfest auf einer als Hohlwelle ausgebildeten Rotorwelle befestigt, die beispielweise zweiseitig in einem das Getriebe umgebenden Gehäuse gelagert ist. Um das Zentralrad 101 herum sind insgesamt 8 Ritzelwellen 110, 120 einer ersten Getriebestufe paarweise angeordnet, die an einem ersten Ende jeweils ein mit dem Zentralrad 101 kämmendes Ritzel 112, 122 und an einem zweiten Ende jeweils ein Zahnrad 111, 121 mit gegenüber dem Ritzel 112, 122 deutlich vergrößertem Durchmesser aufweisen. Dabei bilden jeweils zwei Ritzelwellen 110, 120 ein Ritzelwellenpaar. Das Zahnrad 111 einer ersten Ritzelwelle 110 eines Ritzelwellenpaars ist an einer der Rotornabe zugewandten Seite des Zentralrads 101 angeordnet, während das Zahnrad 121 der zweiten Ritzelwelle 120 des Ritzelwellenpaars an der von der Rotornabe abgewandten Seite des Zentralrads 101 angeordnet ist. Des weiteren sind insgesamt 4 jeweils einem Ritzelwellenpaar zugeordnete Summierwellen 130 vorgesehen. Die Summierwellen umfassen jeweils 2 axial beabstandete Ritzel 132, die jeweils mit einem Zahnrad 111, 121 eines zugeordneten Ritzelwellenpaars in Eingriff stehen.

Die Ritzelwellen 110, 120 sind über in zwei gegenüberliegende Gehäusewände eingesetzte Lager gelagert. Durch eine derartige symmetrische Anordnung der Ritzelwellen 110, 120 ist eine Lagerung der das Zentralrad 101 tragenden Rotorwelle abgesehen vom Eigengewicht des Zentralrads 101 und der Rotorwelle bei einer gleichmäßigen Generatorbelastung, d.h. Rotorleistung zu gleichen Anteilen auf 2 Generatoren aufgeteilt, frei von Radialkräften.

An den Summierwellen 130 ist jeweils an der von der Rotornabe abgewandten Seite des Zentralrads 101 ein Zahnrad 131 angeordnet, das einer zweiten Getriebestufe zugeordnet ist. Die Zahnräder 131 der Summierwellen 130 kämmen jeweils mit einem Ritzel 202 an einer Ritzelwelle 200 der zweiten Getriebestufe. Die Ritzelwellen 200 der zweiten Getriebestufe tragen jeweils ein Zahnrad 201, das fest mit der Ritzelwelle 200 verbunden ist und eine Schrägverzahnung aufweist. Die Schrägverzahnungen der vier Zahnräder 201 an den Ritzelwellen 200 der zweiten Getriebestufe haben im vorliegenden Ausführungsbeispiel eine paarweise unterschiedliche Steigungsrichtung. Je nach Anordnung der Zahnräder 201 im Getriebe ist diese Steigungsrichtung links- oder rechtssteigend ausgeführt. Jeweils zwei Zahnräder 201 mit einer unterschiedlichen Steigungsrichtung ein Zahnradpaar. Dabei kämmen die Zahnräder 201 eines Zahnradpaars jeweils mit einem Zahnritzel 301 einer gemeinsamen Abtriebswelle 300. Entsprechend dem vorliegenden Ausführungsbeispiel sind zwei Abtriebswellen 300 vorgesehen, die mit jeweils einem von zwei Generatoren einer Windkraftanlage verbunden werden können. Die Abtriebswellen 300 sind vorzugsweise doppelschrägverzahnt und axial frei gelagert.

Im Hinblick auf niedrige Geräuschemissionen sind das Zentralrad 101 und die Ritzel 112, 122 der Ritzelwellen 110, 120 vorzugsweise doppelschrägverzahnt oder pfeilverzahnt. Grundsätzlich können das Zentralrad 101 und die Ritzel 112, 122 der Ritzelwellen 110, 120 auch geradeverzahnt sein. Die Zahnräder 111, 121 der Ritzelwellen 110, 120 und die Ritzel 132 der Summierwellen 130 sind vorteilhafterweise schrägverzahnt. Dabei weisen die Zahnräder 111 der ersten Ritzelwellen 110 eine andere Steigungsrichtung als die Zahnräder 121 der zweiten Ritzelwellen 120. Hinsichtlich ihrer Schrägverzahnungswinkel sind die Zahnräder 111, 121 der Ritzelwellen 110, 120 sowie die Zahnräder 131 und Ritzel 132 der Summierwellen 130 derart ausgestaltet sind, daß Axialkräfte gegenseitig kompensiert werden. Die Ritzelwellen 110, 120 brauchen damit nur radial gelagert zu werden. Eine Axiallagerung der Summierwellen 130 kann daher entfallen.

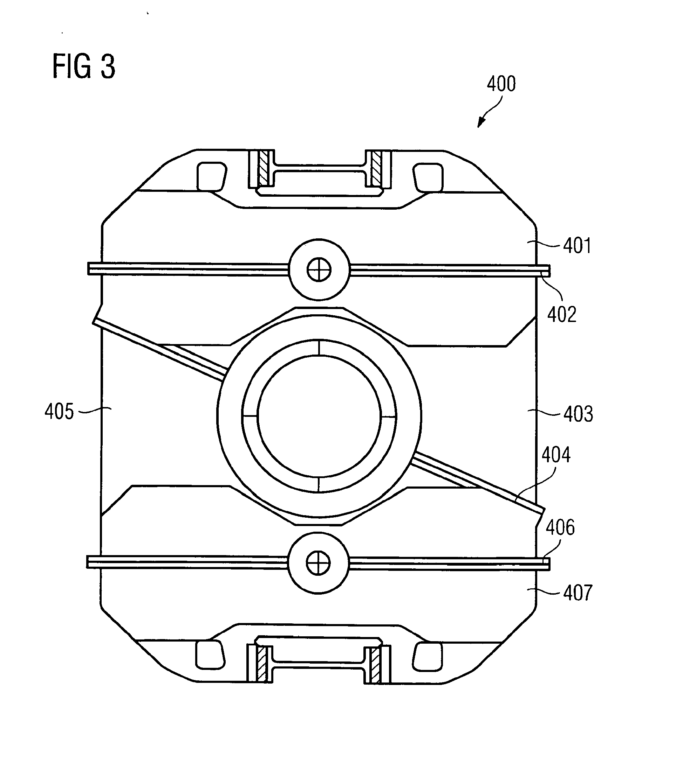

Das Zentralrad 101, die Ritzelwellen 110, 120, 200, die Summierwellen 130 und die Abtriebswellen 300 sind in dem in Figur 3 dargestellten Gehäuse 400 gelagert. Das Gehäuse 400 ist im vorliegenden Ausführungsbeispiel durch zwei parallele Gehäusefugen 402, 406 und eine schräg verlaufende Gehäusefuge 404 in zumindest vier Gehäuseteile 401, 403, 405, 407 geteilt. Wenn das Gehäuse 400 in Längsrichtung noch weitere radial umlaufende Gehäusefugen aufweist, erhöht sich die Anzahl der Gehäuseteile auf ein ganzzahliges Vielfaches von vier.

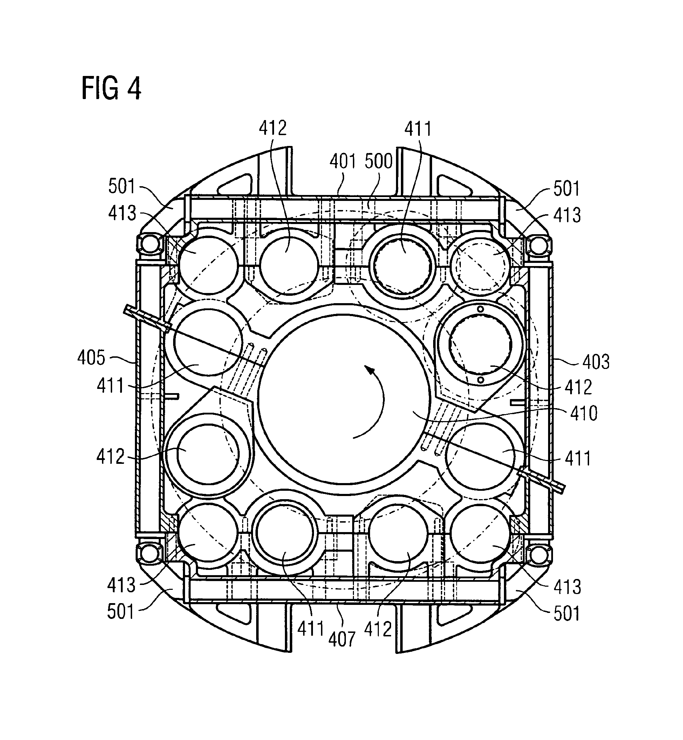

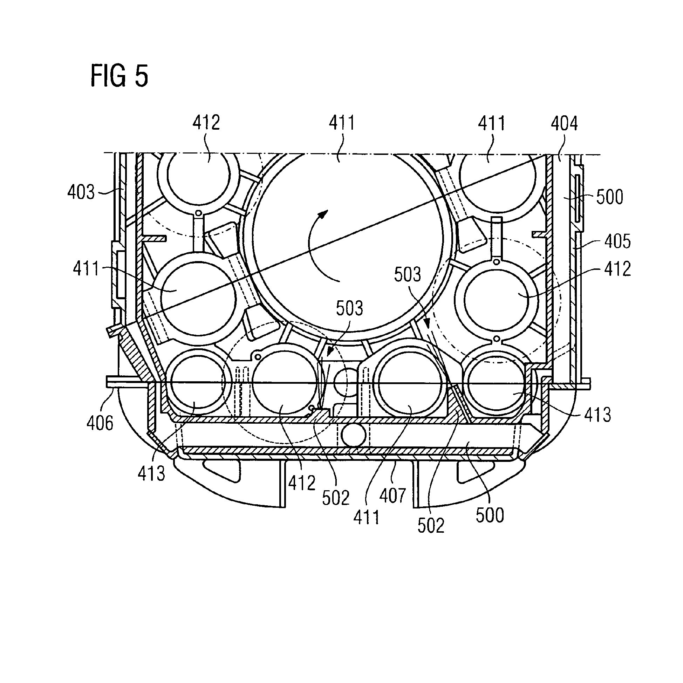

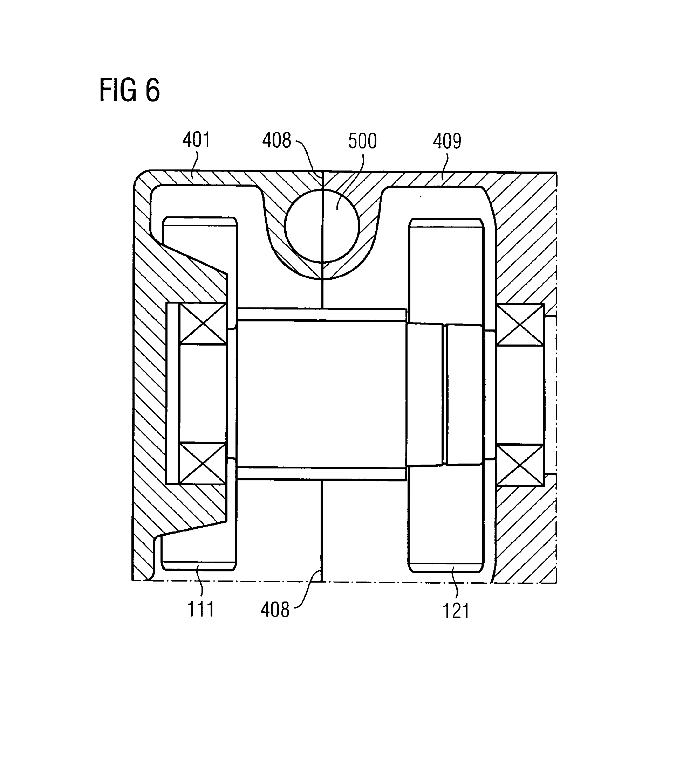

Anhand Figur 4 und 5 ist zu erkennen, daß im Gehäuse 400 beiderseits der vertikalen Gehäusefugen 402, 406 vier der acht Ritzelwellen 110, 120 der ersten Getriebestufe, die vier Summierwellen 130, die vier Ritzelwellen 200 der zweiten Getriebestufe und die beiden Abtriebswellen 300 gelagert sind. Das Zentralrad 101 und weitere zwei der acht Ritzelwellen 110, 120 der ersten Getriebestufe sind beiderseits der schrägen Gehäusefuge 404 angeordnet. Somit lassen sich die genannten Wellen und verzahnten Bauteile durch Öffnen des Gehäuses 400 an den Gehäusefugen 402, 404, 406 auf einfache Weise entnehmen. Insbesondere bei Wartungs- oder Instandsetzungsarbeitung an Offshore-Windkraftanlagen ist dies ein Vorteil. Zwei der acht Ritzelwellen 110, 120 der ersten Getriebestufe sind in einem Bereich angeordnet, in dem keine der Gehäusefugen 402, 404, 406 verläuft. Diese Ritzelwellen lassen sich axial durch Öffnen des Gehäuses 400 montieren und demontieren, beispielsweise durch Öffnen des Gehäuses 400 an einer optionalen in Figur 6 dargestellten radial umlaufenden Gehäusefuge 408. Durch die radial umlaufende Gehäusefuge 408 wird das Gehäuse 400 unter anderem in die beiden axial aneinander angrenzenden Gehäuseteile 401 und 409 unterteilt.

Im Gehäuse 400 sind zur Anordnung und Lagerung des Zentralrads 101, der Ritzelwellen 110, 120, 200 und der Summierwellen 130 Lagersitze bildende Aussparungen 410-413 vorgesehen. Zusätzlich ist ein im wesentlichen radial umlaufender Schmierstoffversorgungskanal 500 in das Gehäuse integriert. Der Schmierstoffversorgungskanal 500 kann beispielsweise als komplett geschlossene Ringleitung ausgebildet sein. Dies bietet insbesondere bei ölsumpflosen Getrieben einen deutlichen Vorteil. Im vorliegenden Ausführungsbeispiel ist der Schmierstoffversorgungskanal 500 lediglich an vier Gehäusekanten durch an das Gehäuse 400 montierte Anschlußrohre 501 gebildet. Am Schmierstoffversorgungskanal 500 kann grundsätzlich an einer beliebig wählbaren, geeigneten Stelle Schmierstoff aus einem Vorratsbehälter bzw. über eine Pumpe zugeführt werden.

Im Längsschnitt gemäß Figur 6 ist im Detail zu erkennen, daß der Schmierstoffversorgungskanal 500 in einem axial definierten Bereich zwischen den Zahnrädern 111 der ersten Ritzelwellen 110 und den Zahnrädern 121 der zweiten Ritzelwellen 120 der ersten Getriebestufe um das Zentralrad 101 angeordnet ist. In diesem Bereich ist auch die radial umlaufende Gehäusefuge 408 zwischen den axial aneinander grenzenden Gehäuseteilen 401, 409 vorgesehen. Werden diese Gehäuseteile als Gußteile realisiert, so kann der Schmierstoffversorgungskanal 500 auf einfache Weise durch Aussparungen an angrenzenden Gehäuseteilen gebildet werden, insbesondere mit großem Querschnitt. Dies ermöglicht ferner eine verbesserte Gehäusesteifigkeit, was wiederum zu einer wirksameren Kraft- und Drehmomentübertragung beiträgt.

An der radial umlaufenden Gehäusefuge 408 sind integrierte Dichtflächen gebildet, die mittels von außerhalb des Gehäuses zugänglicher Schrauben hinsichtlich eines Betriebsschmierstoffdrucks vorgespannt sind. Darüber hinaus weist der Schmierstoffversorgungskanal 500 Bohrungen für Spritzdüsen 503 auf, die über kurze Anschlußstutzen 502 mit dem Schmierstoffversorgungskanal 500 verbunden und auf Verzahnungsteile von Zentralrad 101, Ritzelwellen 110, 120 und Summierwellen 130 ausgerichtet sind.

Bei Windkraftanlagen, deren Getriebe einen Ölsumpf aufweist, dessen Ölstand etwas unterhalb von Dichtspalten üblicher Labyrinthdichtungen liegt, ergeben sich mit dem radial umlaufenden Schmierstoffversorgungskanal 500 Vorteile im Trudelbetrieb. Wenn im Trudelbetrieb beispielsweise kein Strom für elektrische Schmierstoffversorgungspumpen erzeugt wird, kann ein Leerlaufen eines großvolumigen Schmierstoffversorgungskanals 500 genutzt werden, um den Ölstand im Ölsumpf zu erhöhen. Auf diese Weise können im Trudelbetrieb ansonsten nicht mit Schmierstoff versorgte Verzahnungsteile zumindest tauchgeschmiert werden. Im Normalbetrieb wird der Ölstand im Ölsumpf durch die Schmierstoffversorgungspumpen wieder abgesenkt, so daß keine Tauchschmierung mehr besteht. Auf diese Weise können Plantschverluste und starke Schaumbildung im Normalbetrieb vermieden werden.

Neben dem in den Figuren 4 bis 6 dargestellten Schmierstoffversorgungskanal 500 kann ein weiterer im wesentlichen radial umlaufender Schmierstoffversorgungskanal in das Gehäuse 400 integriert sein, der in einem Bereich zwischen den Zahnrädern 121 der zweiten Ritzelwellen 120 der ersten Getriebestufe und den Zahnrädern 131 der Summierwellen 130 angeordnet ist. Auch dieser weitere Schmierstoffversorgungskanal kann in ein zumindest dreiteiliges Getriebegehäuse eingebettet sein, das im Bereich des weiteren Schmierstoffversorgungskanals eine weitere radial umlaufende Gehäusefuge aufweist. In entsprechender Weise können an der weiteren Gehäusefuge integrierte Dichtflächen gebildet sein, die mittels von außerhalb des Getriebegehäuses zugänglicher Schrauben hinsichtlich eines Betriebsschmierstoffdrucks vorgespannt sind.

Insgesamt besteht die Möglichkeit bei mehrstufigen Getrieben, die mehrere Gehäuseteile umfassen, jeden Gehäuseteil mit einem eigenen Schmierstoffversorgungskanal zu versehen, so daß innerhalb des Getriebes allenfalls nur wenige weitere Schmierstoffrohrleitungen vorzusehen sind, die aufwendig miteinander verbunden bzw. angeschlossen werden müssen.

Die vorliegende Erfindung ist nicht auf das beschriebene Ausführungsbeispiel beschränkt.

## Patentansprüche

1. Leistungsverzweigtes Getriebe für eine Windkraftanlage mit
- einem mit einer Rotornabe über eine Antriebswelle verbindbaren außenverzahnten Zentralrad,
- mehreren paarweise um das Zentralrad herum angeordneten Ritzelwellen, die an einem ersten Ende jeweils ein mit dem Zentralrad kämmendes Ritzel und an einem zweiten Ende jeweils ein Zahnrad mit gegenüber dem Ritzel vergrößerten Durchmesser aufweisen, wobei jeweils zwei Ritzelwellen ein Ritzelwellenpaar bilden und das Zahnrad einer ersten Ritzelwelle eines Ritzelwellenpaars an einer ersten Seite des Zentralrads angeordnet ist, während das Zahnrad der zweiten Ritzelwelle des Ritzelwellenpaars an der zweiten Seite des Zentralrads angeordnet ist,
- mehreren jeweils einem Ritzelwellenpaar zugeordneten Summierwellen, deren Ritzel mit beiden Zahnrädern eines zugeordneten Ritzelwellenpaars in Eingriff stehen,
- einem in ein Getriebegehäuse integrierten im wesentlichen radial umlaufenden Schmierstoffversorgungskanal, der in einem Bereich zwischen den Zahnrädern der ersten Ritzelwellen und den Zahnrädern der zweiten Ritzelwellen um das Zentralrad angeordnet ist.

2. Getriebe nach Anspruch 1,
bei dem der Schmierstoffversorgungskanal in ein zumindest zweiteiliges Getriebegehäuse eingebettet ist, das im Bereich des Schmierstoffversorgungskanals eine radial umlaufende Trennfuge aufweist.

3. Getriebe nach Anspruch 2,
bei dem an der Trennfuge integrierte Dichtflächen gebildet sind, die mittels von außerhalb des Getriebegehäuses zugänglicher Schrauben hinsichtlich eines Betriebsschmierstoffdrucks vorgespannt sind.

4. Getriebe nach einem der Ansprüche 2 oder 3,
bei dem der Schmierstoffversorgungskanal Bohrungen für Spritzdüsen aufweist, die auf Verzahnungsteile von Zentralrad, Ritzelwellen und/oder Summierwellen ausgerichtet sind.

5. Getriebe nach einem der Ansprüche 1 bis 4,
bei dem an den Summierwellen jeweils an der zweiten Seite des Zentralrads ein Zahnrad angeordnet ist, das einer zweiten Getriebestufe zugeordnet ist, und bei dem ein weiterer in das Getriebegehäuse integrierter im wesentlichen radial umlaufender Schmierstoffversorgungskanal vorgesehen ist, der in einem Bereich zwischen den Zahnrädern der zweiten Ritzelwellen und den Zahnrädern der Summierwellen um das Zentralrad angeordnet ist.

6. Getriebe nach Anspruch 5,
bei dem der weitere Schmierstoffversorgungskanal in ein zumindest dreiteiliges Getriebegehäuse eingebettet ist, das im Bereich des weiteren Schmierstoffversorgungskanals eine weitere radial umlaufende Trennfuge aufweist.

7. Getriebe nach Anspruch 6,
bei dem an der weiteren Trennfuge integrierte Dichtflächen gebildet sind, die mittels von außerhalb des Getriebegehäuses zugänglicher Schrauben hinsichtlich eines Betriebsschmierstoffdrucks vorgespannt sind.

8. Getriebe nach einem der Ansprüche 1 bis 7,
bei dem die Zahnräder der Ritzelwellen und die Ritzel der Summierwellen schrägverzahnt sind, und bei dem die Summierwellen nur radial gelagert sind, bei dem die Zahnräder der Ritzelwellen und die Ritzel der Summierwellen hinsichtlich ihrer Schrägverzahnungswinkel derart ausgestaltet sind, daß Axialkräfte gegenseitig kompensiert sind.

9. Getriebe nach Anspruch 8,
bei dem die Zahnräder der ersten Ritzelwellen eine andere Steigungsrichtung aufweisen als die Zahnräder der zweiten Ritzelwellen.

10. Getriebe nach einem der Ansprüche 1 bis 9,
bei dem das Zentralrad und die Ritzel der Ritzelwellen doppelschrägverzahnt oder pfeilverzahnt sind.

11. Getriebe nach einem der Ansprüche 1 bis 10,
bei der die mit Rotornabe verbindbare Antriebswelle eine Rotorwelle ist, und bei dem die Zahnräder der ersten Ritzelwellen rotorsseitig angeordnet sind, und bei dem die Zahnräder der zweiten Ritzelwellen generatorseitig angeordnet sind
